**Europäisches Patentamt**

(19) **European Patent Office**

**Office européen des brevets**

(11) Numéro de publication: **0 163 792**
**B1**

(12) # FASCICULE DE BREVET EUROPÉEN

(45) Date de publication du fascicule du brevet:
02.11.88

(21) Numéro de dépôt: **84401125.4**

(22) Date de dépôt: **01.06.84**

(51) Int. Cl.⁴: **B 60 S 3/00, E 01 H 1/08**

(54) Appareil de nettoyage de véhicules, et véhicule muni d'un équipement auxiliaire de nettoyage.

(43) Date de publication de la demande:
**11.12.85 Bulletin 85/50**

(45) Mention de la délivrance du brevet:
**02.11.88 Bulletin 88/44**

(84) Etats contractants désignés:
**AT BE CH DE GB IT LI LU NL**

(56) Documents cité:
**FR-A-1 299 647**
**FR-A-2 536 713**
**GB-A-970 088**
**GB-A-1 025 659**
**US-A-2 677 629**
**US-A-2 937 713**
**US-A-4 115 896**

**POPULAR MECHANICS, vol. 115, no. 5, mai 1961, page 93, New York, US; "Railroad-car cleaner blows up a storm"**

(73) Titulaire: **Bobault, Christian, 19, rue Pasteur, F-91490 MILLY- LA- FORET (FR)**

(72) Inventeur: **Bobault, Christian, 19, rue Pasteur, F-91490 MILLY- LA- FORET (FR)**

(74) Mandataire: **Arnaud, Jean Pierre Alfred, Cabinet Arnaud 94 rue Saint- Lazare, F-75009 Paris (FR)**

## Description

La présente invention concerne un appareil de nettoyage de véhicule, ainsi que des véicules munis d'un équipement auxiliaire qui facilite leur nettoyage par mise en oeuvre un procédé de nettoyage qui délimite un volume de transport qui peut être fermé et qui comporte au moins deux ouvertures.

Un exemple d'un appareil de nettoyage de l'art anterieur est donné par le document US-A-4 115 896 qui correspond au préambule de la revendication 1.

Les véhicules auxquels s'applique l'invention sont essentiellement les autobus et autocars, les wagons de chemin de fer pour passagers, par exemple de métropolitain, les avions, et même, dans certaines conditions, les poids lourds et les automobiles.

Cependant, on décrit l'invention, dans la suite du présent mémoire, en référence au nettoyage des autocars, à titre purement illustratif et non limitatif.

Le nettoyage interne des autocars est en général réalisé par du personnel muni de balais et/ou d'aspirateurs. Compte tenu de la surface relativement grande d'un tel véhicule et surtout de la gêne apportée par les différents accessoires, tels que les sièges, les barres de retenue, etc., la main d'oeuvre nécessaire au nettoyage est importante. En outre, l'opération doit être réalisée à un moment où les véhicules ne sont pas utilisés. Il arrive donc souvent que le nettoyage des autocars nécessite une certaine immobilisation de ceux-ci.

L'invention concerne un appareil de nettoyage qui présente une grande efficacité, qui ne nécessitent qu'un temps très réduit et qui évite toute immobilisation dos véhicules, le cas échéant.

Une telle appareil est destiné au nettoyage de véhicule qui délimite un volume de transport qui peut être sensiblement fermé, ce volume de transport ayant au moins deux ouvertures, telles que des portes d'accès ou des fenêtres ouvrantes. Il est avantageux que ces ouvertures soient aussi proches que possible des extrémités du volume de transport à nettoyer, et si possible à proximité du sol. Selon l'inventionn, les deux ouvertures du véhicule sont ouvertes et un puissant courant d'air est formé de manière qu il pénètre par l'une des ouvertures et sorte par l'autre. Ce courant d'air est avantageusement suffisant pour qu'il entraîne des bouteilles de verre par roulement sur le sol, lorsque les bouteilles de verre ont une orientation convenable. Il faut cependant que la puissance de courant d'air soit limitée afin que de telles bouteilles ne puissent pas être cassées.

Ce courant d'air peut être formé par soufflage par l'une des ouvertures, par aspiration par l'une des ouvertures ou par soufflage par l'une des ouvertures et aspiration par l'autre.

Plus précisément, l'appareil peut être utilisé pour le nettoyage de véhicule délimitant un volume de transport qui peut être fermé et qui comporte au moins deux ouverture, selon un procédé comprenant:

- le dégagement d'au moins deux ouvertures disposées de préférence à proximité des extrémités du volume de transport, et
- la création d'un puissant courant d'air pénétrant par l'une des ouvertures et sortant par l'autre.

Il est avantageux que le procédé comporte en outre la séparation des déchets entraînés par le courant d'air, par exemple à l'aide d'un dispositif de filtration.

Il est aussi avantageux que le procédé comprenne en outre le soulèvement de certains déchets au moins par projection locale de jets d'air comprimé. Il est avantageux que cette projection locale soit discontinue au cours du temps.

Dans un mode de réalisation avantageux, le courant d'air créé dans le volume de transport a une vitesse de l'ordre de 2 à 10 m/s.

L'invention concerne un appareil de nettoyage de véhicule délimitant un volume de transport qui peut être fermé et qui comporte au moins deux ouvertures, cet appareil étant destiné à la mise en oeuvre du procédé susmentionné. Cet apparil comporte avantageusement:

- un bâti délimitant un conduit qui a une entrée et une sortie,
- un dispositif de ventilation, monté transversalement au conduit afin qu'il fasse circuler un courant d'air de l'entrée à la sortie du conduit,
- un dispositif de séparation de déchets monté transversalement au conduit entre l'entrée de celui-ci et le dispositif de ventilation, et
- un dispositif d'adaptation monté à l'entrée du conduit et destiné à éntourer une partie au moins d'une ouverture du véhicule.

Il est avantageux que le dispositif de séparation de déchets comporte un dispositif qui sépare les déchets lourds par gravité, et un filtre qui sépare les déchets légers tels que la poussière.

Dans un mode de réalisation avantageux, un autre dispositif d'adaptation est monté à la sortie du conduit et est destiné à entourer une partie au moins d'une seconde ouverture du véhicule, si bien qu'un courant d'air circule en circuit fermé à l'intérieur du volume de transport.

Il est avantageux que le dispositif d'adaptation ou chaque dispositif d'adaptation comporte un dispositif à soufflet dont la partie opposée au conduit est entourée au moins en partie d'un dispositif d'amortissement, et un dispositif d'application du dispositif d'amortissement contre une partie de véhicule voisine de l'ouverture.

Il est avantageux que le dispositif de ventilation ait un débit compris entre 50 000 et 300

000 m³/h.

En outre, il est avantageux que l'appareil comporte au moins un dispositif fixe ou mobile de projection localisée de jets d'air comprimé à l'intérieur du véhicule. Il est en particulier avantageux que les jets d'air comprimé soient projetés d'une manière discontinue.

L'invention concerne aussi un véhicule destiné à être nettoyé par mise en oeuvre du procédé selon l'invention, et comportant, à proximité de son plancher, des dispositifs destinés à projeter des jets d' air comprimé vers ce plancher. De préférence, ces dispositifs projettent des jets d'air comprimé d'une manière discontinue.

D'autres caractéristiques et avantages de l'invention ressortiront mieux de la description qui va suivre, faite en référence aux dessins annexés sur lesquels:

la figure 1 est une vue schématique en plan, avec des parties arrachées, représentant un autocar au cours d'une opération de nettoyage par mise en oeuvre du procédé et de l'appareil selon l'invention ;

la figure 2 est une coupe longitudinale d'un mode de réalisation d'appareil selon l'invention;

la figure 3 est une vue en plan de l'appareil de la figure 2;

la figure 4 est un diagramme synoptique d'un circuit de commande de buses de projection d'air comprimé avantageusement utilisé avec l'appareil des figures 2 et 3;

la figure 5 représente schématiquement un mode de réalisation de rampe de projection de jets d'air comprimé; et

les figures 6 et 7 sont respectivement une vue en plan et une élévation latérale d'un dispositif mobile de projection d'air comprimé.

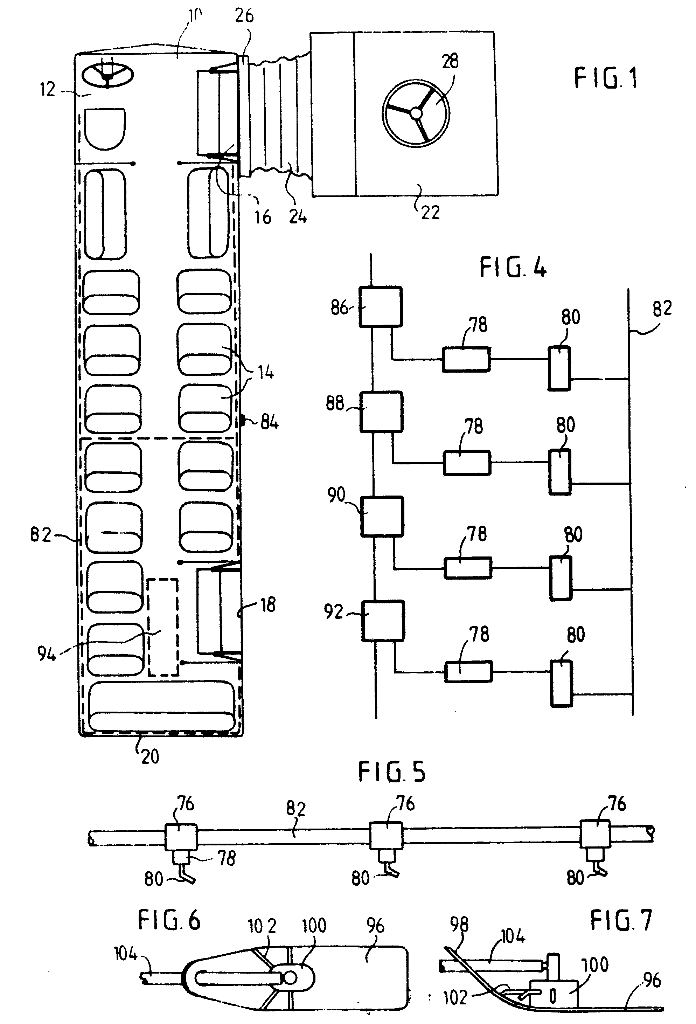

La figure 1 est une vue générale en plan avec des parties arrachées illustrant la mise en oeuvre de l'invention. Cette figure représente un autocar 10 qui délimite un volume de transport comprenant une cabine 12 de conduite et un volume destiné aux passagers et comprenant des sièges 14. L'accès à ce volume de transport est assuré par une porte avant 16 et par une porte arrière 18. Fréquemment, ces autocars comportent, par exemple à l'arrière comme indiqué par la référence 20, une issue de secours qui peut être elle-même ouverte.

L'appareil 22 selon l'invention comprend essentiellement un bâti qui, du côté de l'autocar 10, comporte un soufflet 24 se terminant par un dispositif 26 d'amortissement, par exemple un gros boudin de mousse souple de matière plastique. Un dispositif à vérin, non représenté, vient appliquer ce boudin 26 contre la carrosserie du véhicule autour de la porte 16. L'appareil 22 contient un puissant ventilateur qui forme un courant d'air qu'il évacue par un orifice 28. En conséquence, de l'air est aspiré par la porte 18 et circule sur toute la longueur de l'autocar 10 avant de s'échapper par la porte 16 et de passer dans l'appareil 22 selon l'invention.

Le nettoyage qu'on vient de décrire est le plus simple qui est réalisé selon l'invention. Comme l'indique la description qui suit, d'autres modes de réalisation mettent en oeuvre des dispositifs particuliers qu'on considère maintenant plus en détail.

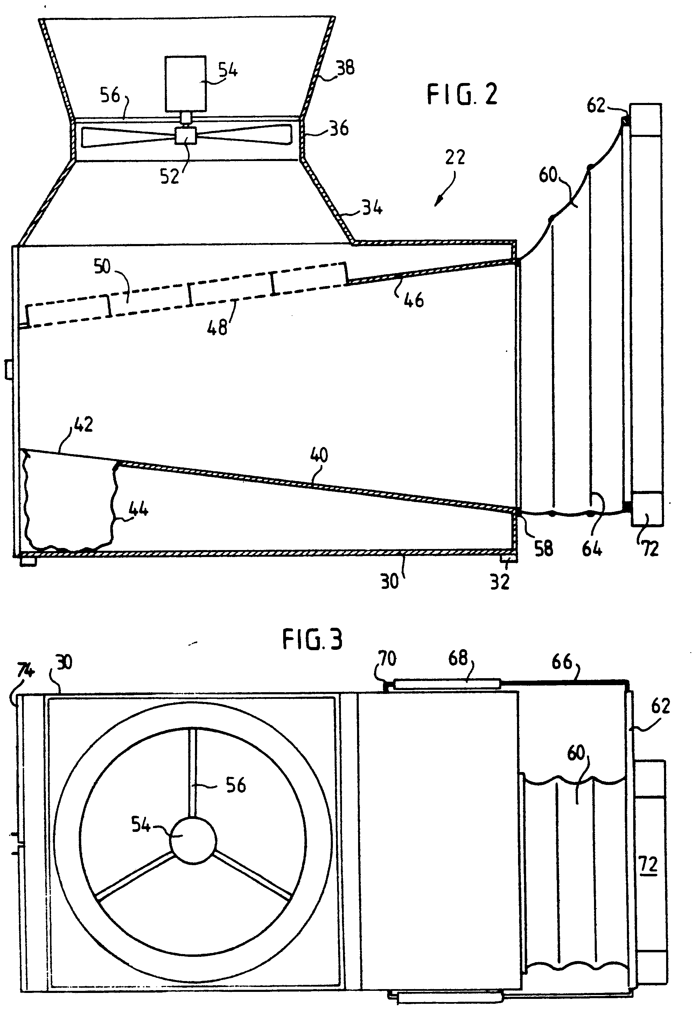

Les figures 2 et 3 représentent un appareil qui comporte un bâti 30 monté sur des vérins 32. Ce bâti 30 a essentiellement une forme parallélépipédique, d'environ 3 m de longueur, 1,80 m de largeur et 1,80 m de hauteur, et il est surmonté par un tronçon de conduit chaudronné qui comporte une transition 34 entre une section rectangulaire, apparaissant sur la figure 3, et une section circulaire, un tronçon cylindrique 36 formant boîtier pour un ventilateur, et un tronçon évasé 38 qui débouche à l'air libre.

A l'intérieur du volume parallélépipédique du bâti 30, une cloison pleine 40 remonte légèrement de l'extrémité d'entrée, représentée à droite sur les figures 2 et 3, vers le fond du bâti, mais elle se termine avant cette extrémité. Elle délimite ainsi un espace 42 qui forme une embouchure pour la réception de déchets relativement lourds qui tombent dans des sacs 44. Le volume de la partie parallélépipédique comporte une seconde cloison 46 qui a une partie pleine et une partie perforée 48. Celle-ci est destinée à supporter des filtres 50. Dans un mode de réalisation avantageux, les filtres comportent une grille à mailles larges (1 cm par exemple), une grille à mailles fines (1 mm environ par exemple) et des modules de filtration qui ont par exemple des orifices inférieurs à 500 microns. Ces modules ont de préférence une surface de filtration disposée en accordéon. Les filtres n'introduisent qu'une faible perte de charqe.

Un ventilateur hélicoïdal 52 est monté au-dessus des filtres 50 et il est entraîné par un moteur 54 porté par des croisillons 56.

L'entrée du bâti 30 porte un soufflet qui comporte, à une extrémité, un premier cadre 58 fixé au caisson. Le soufflet proprement dit 60 a un second cadre 62, opposé au premier, et des barres intermédiaires 64 sont destinées à donner une bonne rigidité au soufflet 60.

Le cadre extérieur 62 est porté, à droite et à gauche, par des tiges 66 de piston de deux vérins 68 placés de part et d'autre du bâti 30. Ces vérins sont fixés en 70 sur le caisson. Dans un mode de réalisation avantageux, deux vérins supportent le soufflet de chaque côté afin que celui-ci, lorsqu'il se plie et se déplie, déplace toujours le cadre 62 parallèlement à lui-même.

Le cadre 62 porte un boudin épais 72 qui est avantageusement formé d'une mousse souple de matière plastique.

A l'extrémité opposée, le caisson 30 a deux portes 74 qui peuvent être ouvertes pour l'évacuation des déchets contenus dans les sacs 44.

Les figures 2 et 3 ne représentent que les éléments essentiels de l'appareil. Il faut noter que celui-ci comporte avantageusement de nombreux autres dispositifs. Par exemple, il comporte un cache destiné à fermer la partie supérieure du tronçon 38 afin que, lorsque l'appareil n'est pas utilisé, la pluie ne puisse pas tomber sur les filtres 50. Ce cache est avantageusement commandé automatiquement en même temps que les vérins 68 qui mettent en position le boudin 72. On n'a pas non plus représenté le système de commande qui permet l'alimentation du moteur 54 et la commande des vérins 68. On n'a pas non plus représenté les dispositifs de sécurité, d'un type bien connu dans la technique.

On considère maintenant la mise en oeuvre de l'appareil représenté sur les figures 2 et 3. Dans la position de repos de l'appareil, un cache ferme l'orifice supérieur du tronçon 38 et le soufflet 60 est replié contre le bâti 30. Lorsqu'un véhicule doit être nettoyé, il est conduit à proximité de l'entrée du bâti 30, la porte avant de préférence étant en face du soufflet comme représenté sur la figure 1. L'appareil selon l'invention est avantageusement placé à proximité d'une pompe de carburant. Lorsque le conducteur a arrêté son véhicule, il ouvre les deux portes avant et arrière 16 et 18, et éventuellement une issue de secours telle que 20. Il revient alors vers l'avant du véhicule.

Pendant ce temps le pompiste chargé de faire le plein de carburant s'est approché de l'appareil 22 et a en foncé un bouton de commande. A ce moment, les vérins 68 sont commandés automatiquement afin qu'ils viennent appliquer le boudin 72 contre la porte du véhicule, avec une force réglée. Simultanément, d'autres vérins écartent le cache qui obture la partie supérieure de l'appareil. Comme ces opérations sont réalisées automatiquement, le pompiste retourne vers sa pompe et remplit le réservoir de carburant. Dès que le cache supérieur de l'appareil a été retiré, le dispositif de ventilation se met en route et provoque la formation d'un puissant courant d'air à l'intérieur du véhicule. Le conducteur du véhicule qui n'a pas d'opération particulière à effectuer, prend alors un pistolet à air comprimé, accessible par l'intérieur du soufflet, et parcourt l'intérieur de son véhicule en projetant un jet d'air comprimé contre le sol afin que la poussière soit soulevée. Dès que la poussière et les déchets sont soulevés, le puissant courant d'air créé par l'appareil selon l'invention les entraîne. Les déchets relativement lourds glissent le long de la cloison 40 et viennent tomber dans les sacs 44. Les déchets moins lourds sont projetés vers le fond de l'appareil et tombent aussi dans les sacs 44. Les déchets légers sont retenus par le filtre 50. Seules les très fines poussières sont chassées a l'air libre, mais à grande hauteur.

Lorsque le pompiste a terminé le remplissage du réservoir, c'est-à-dire au bout de quelques minutes, il enfonce un bouton d'arrêt de l'appareil selon l'invention. Simultanément, le conducteur remet en place le pistolet à air comprimé dont le tuyau est automatiquement réenroulé dans l'appareil selon l'invention. Le soufflet se replie automatiquement sans aucune opération supplémentaire. Le conducteur du véhicule peut donc conduire ce dernier au garage ou pour une mission, en refermant simplement les portes.

Dans l'exemple indiqué précédemment, le dispositif de ventilation fonctionne avec un débit de l'ordre de 100 000 m³/h. Il est entraîné par un moteur électrique dont la puissance est de l'ordre de 16,5 kW. Bien entendu, l'appareil comporte un circuit convenable de démarrage permettant, au bout d'une dizaine de secondes, le passage du montage étoile au montage triangle, de manière connue.

Il est important pour l'efficacité du nettoyage selon l'invention que les déchets, et notamment les poussières, qui peuvent être piégés sur le plancher du véhicule, souvent recouvert d'une moquette, soient soulevés temporairement. Dès que les déchets ont été soulevés, le courant d'air n'a aucune peine à les entraîner. Pour cette raison, il est très souhaitable d'utiliser un pistolet pneumatique. Cependant, dans des variantes, cette opération peut être remplacée par le fonctionnement, automatique ou non, de buses de projection de jets d'air. De préférence, ces buses fonctionnent de manière discontinue car elles créent ainsi une plus grande turbulence qui provoque un meilleur soulèvement des déchets.

Plus précisément, la figure 5 représente un exemple de rampe comprenant des buses de projection de jets d'air comprimé. Ces buses sont avantageusement sous forme de tubes coudés 80 raccordés chacun à une électrovanne 78 fixée a un raccord 76 placé le long d'une canalisation 82 formant une rampe d'alimentation.

La figure 1 représente un exemple de disposition d'une telle rampe. Celle-ci est alimentée par une prise d'air comprimé 84 et elle est disposée le long des deux côtes de l'autocar, une canalisation transversale reliant les deux branches. On note que l'une des branches entoure la partie arrière du volume de transport et permet ainsi un nettoyage très complet.

Lorsque l'autocar 10 comporte de telles rampes de projection de jets d'air, le pompiste ou un autre opérateur raccorde simplement une tuyauterie d'alimentation en air comprimé au raccord 84 et, pendant tout le fonctionnement de l'appareil 22, les busses projettent, de préférence de façon discontinue, des jets d'air qui soulèvent la poussière et les autres déchets.

L'invention concerne donc aussi des véhicules munis de telles rampes de projection de jets d'air vers le plancher, afin que les déchets soient soulevés.

La figure 4 représente un exemple de commande qui permet le fonctionnement discontinu des différentes buses 80. Sur la figure 4, les références 78, 80 et 82 désignent les mêmes éléments que sur la figure 5, c'est-à-dire les électrovannes, les buses de projection et la rampe d'alimentation.

Un premier relais temporisé 86, lorsqu'il reçoit un signal d'excitation, provoque l'alimentation d'une première électrovanne 78 pendant un temps déterminé, par exemple 5 secondes, puis transmet un signal de commande à un second relais temporisée 88. Celui-ci transmet alors un signal de commande pendant un temps déterminé, par exemple 5 secondes, à la seconde électrovanne 78 et transmet ensuite un signal de commande à un troisième relais temporisé 90. Celui-ci fonctionne comme les précédents et commande finalement un quatrième relais temporisé 92. Le circuit comporte ainsi autant de relais temporisés que de buses de projection de jets d'air. Cependant, il ne s'agit que d'un exemple de dispositif et les hommes du métier en connaissent beaucoup d'autres assurant une telle commande temporisée.

Les figures 6 et 7 représentent un dispositif autonome permettant la mise en oeuvre d'une variante du procédé selon l'invention. Un châssis 96 en forme de traîneau ou de ski ayant une partie avant relevée 98 porte un distributeur 100 d'air comprimé muni de plusieurs buses de soufflage 102. Celles-ci ont avantageusement des orientations différentes afin que les jets d'air formés permettent un balayage de tout le sol lorsque le traîneau y est tiré. Le distributeur 100 est alimenté en air comprimé, de préférence avec un débit pulsé, par un tuyau souple 104 dont l'autre extrémité est avantageusement reliée à un enrouleur automatique (non représenté) placé dans le bâti 30.

Ainsi, lorsque le conducteur a ouvert les portes de son véhicule, il vient prendre le dispositif dans le bâti 30 et le porte au fond du véhicule, si bien que le tuyau 104 se déroule. Le conducteur pose le dispositif au sol et celui-ci y glisse lorsqu'il est tiré progressivement par l'enrouleur. Pendant ce déplacement, les buses projettent des jets d'air à chaque impulsion du courant d'air transmis par le tuyau 104.

Comme les saletés et notamment la poussière ont tendance à s'accumuler sur le plancher, il est souhaitable que le courant d'air soit le plus fort au niveau du plancher. A cet effet, il peut être souhaitable que les autocars 10 soient munis de trappes 94 qui peuvent être ouvertes au moment du nettoyage. Cette aspiration au niveau du plancher améliore le nettoyage au-dessous des sièges. Dans une variante, des cloisons temporaires, par exemple gonflables, peuvent être disposées transversalement, à proximité du plafond. Cependant, cette disposition n'est pas indispensable lorsque les ouvertures sont relativement grandes. Elle peut devenir très utile par contre lorsque la section interne du véhicule est relativement grande et variable et lorsque les ouvertures ont une petite section. Par exemple, les avions ont en général des ouvertures d'accès relativement petites et une section variable qui est très importante vers l'avant de l'avion. Dans ce cas, il peut être souhaitable de disposer des cloisons amovibles qui canalisent le courant d'air à proximité des emplacements les plus sales.

L'appareil représenté est de type fixe. Cependant, il peut être mobile. En particulier, lorsqu'il est destiné au nettoyage des aéronefs, il est avantageux que l'appareil puisse être déplacé vers les orifices d'accès. On utilise d'ailleurs déjà dans le nombreux aéroports des soufflets qui viennent s'appliquer sur les portes et qui peuvent faciliter la mise en oeuvre du procédé de l'invention.

Bien qu'on ait décrit un appareil formant un courant d'air par aspiration, l'appareil peut aussi fonctionner par soufflage. Dans le cas représenté sur la figure 1, si l'appareil 22 fonctionne par soufflage, les déchets ne sont pas récupérés et sont projetés à l'extérieur. S'il existe un dispositif convenable de récupération, l'utilisation d'un tel procédé est tout à fait envisageable. Cependant, une variante intéressante est celle dans laquelle l'orifice de sortie de l'appareil comporte lui aussi un dispositif d'adaptation analogue au soufflet 24 afin qu'il vienne s'appliquer sur une seconde ouverture. De cette manière, un courant d'air est formé en circuit fermé. Un tel appareil peut être utile par exemple pour le nettoyage de wagons du réseau métropolitain, lorsque ce nettoyage doit être réalisé sous terre, dans un espace confiné dans lequel il n'est pas souhaitable de créer un puissant courant d'air.

Le procédé et l'appareil selon l'invention présentent des avantages importants par rapport à la technique connue. Ainsi, la grande rapidité de l'opération permet une économie du temps et réduit donc l'immobilisation des véhicules. En particulier, lorsque le nettoyage est effectué pendant le remplissage des réservoirs de carbutant, le temps d'immobilisation supplémentaire est nul. Aucune main d'oeuvre n'est plus néssaire pour le nettoyage.

Il faut cependant insister sur un avantage important de l'invention. On constate en effet que la formation d'un courant d'air puissant, circulant pendant plusieurs minutes, permet un renouvellement poussé de l'air et une élimination pratiquement totale des mauvaises odeurs. On observe que, lorsqu'une flotte de véhicules est régulièrement nettoyée par mise en oeuvre du procédé de l'invention, les véhicules sont beaucoup plus propres et sains que ceux qui sont nettoyés par d'autres procédés.

## Revendications

1. Appareil de nettoyage de véhicule délimitant un volume de transport qui peut être fermé et qui comporte au moins deux ouvertures, du type qui comprend:

- un bâti (30) délimitant un conduit ayant une entrée et une sortie,
- un dispositif de ventilation (52) monté transversalement au conduit afin qu'il fasse circuler un courant d'air de l'entrée à la sortie du conduit,
- un dispositif (42, 44) de séparation de déchets, monté transversalement au conduit entre l'entrée de celui-ci et le dispositif de ventilation, et comportant un dispositif de séparation de déchets lourds par gravité, et

- un dispositif d'adaptation (24, 26) monté à l'entrée du conduit et destiné à entourer une partie au moins d'une ouverture du véhicule, caractérisé en ce que

- le conduit comporte une première partie sensiblement horizontale, disposée entre l'entrée et le dispositif de séparation de déchets lourds, et une seconde partie sensiblement verticale dans laquelle le courant est ascendant,

- le dispositif de séparation de déchets comporte aussi un filtre (50) destiné à séparer les déchets légers,

- le filtre (50) est disposé dans la seconde, partie sensiblement verticale du conduit, afin que le courant d'air remonte dans le filtre, les particules arrêtées par le filtre étant retenues à la face inférieure de celui-ci, et

- le dispositif (42, 44) de séparation de déchets lourds par gravité est disposé au-dessous du courant d'air formé dans le conduit et au-dessous du filtre.

2. Appareil selon la revendication 1, caractérisé en ce que le courant d'air formé dans le volume de transport à une vitesse de l'ordre de 2 à 10 m/s.

3. Appareil selon l'une des revendications 1 et 2, caractérisé en ce qu'il comporte en outre une source d'air comprime.

4. Appareil selon la revendication 3, caractérisé en ce qu'il comporte en outre au moins une cloison gonflable destinée à être disposée à l'intérieur du véhicule afin qu'elle en réduise la section libre et à être gonflée à l'aide de la source d'air comprimé.

5. Appareil selon l'une quelconque des revendications précédentes, destiné au nettoyage de véhicules circulant sous terre, caractérisé en ce qu'il comporte un second dispositif d'adaptation monté à la sortie du conduit et destiné à entourer une partie au moins d'une seconde ouverture du véhicule, afin que le courant d'air formé par l'appareil circule pratiquement en circuit fermé.

6. Véhicule destiné à être nettoyé par mise en oeuvre de l'appareil selon l'une quelconque des revendications précédentes, caractérisé en ce qu'il comporte, à proximité de son plancher, des dispositifs (80) destinés à projeter des jets d'air comprimé, de préférence discontinus, vers ce plancher.

7. Véhicule selon la revendication 6, caractérisé en ce que les dispositifs (80) de projection de jets sont répartis en au moins deux groupes, chaque groupe comprenant une électrovanne (78) qui lui est associée.

8. Véhicule selon la revendication 7, caractérisée en ce que chaque électrovanne (78) est commandée indépendamment des autres électrovannes.

9. Véhicule selon la revendication 8, caractérisé en ce qu il comprend une commande temporisée (86 - 92) associée à chaque électrovanne ou groupe d'électrovannes.

**Patentansprüche**

1. Reinigungsanlage für ein Fahrzeug, das ein Transportvolumen begrenzt, das geschlossen sein kann und wenigstens zwei Öffnungen besitzt, enthaltend

- ein Rahmengestell, (30), das eine Leitung mit einem Einlaß und einem Auslaß begrenzt,
- eine Ventilationseinrichtung (52), die quer in der Leitung montiert ist zur Zirkulation eines Luftstromes vom Einlaß zum Auslaß der Leitung,
- eine Einrichtung (42, 44) zum Abtrennen von Abfällen, die quer in der Leitung zwischen ihrem Einlaß und der Ventilationseinrichtung angeordnet ist und eine Einrichtung zum Abtrennen schwerer Abfälle durch Schwerkraft enthält,
- eine Anpaßeinrichtung (24, 26), die am Einlaß der Leitung angeordnet und dazu bestimmt ist, einen Teil wenigstens der einen Fahrzeugöffnung zu umgeben, dadurch gekennzeichnet, daß
- die Leitung einen ersten, im wesentlichen horizontalen Teil, der zwischen dem Einlaß und der Einrichtung zum Abtrennen schwerer Abfälle angeordnet ist, und einen zweiten, im wesentlichen vertikalen Teil enthält, in dem der Luftstrom aufsteigt,
- die Einrichtung zum Abtrennen von Abfällen, ferner einen Filter (50) enthält, der zum Abtrennen leichter Abfälle bestimmt ist,
- der Filter (50) in dem zweiten, im wesentlichen vertikalen Teil der Leitung angeordnet ist, damit der Luftstrom in den Filter aufsteigt, wobei die Teilchen, die durch den Filter festgehalten werden, an dessen Unterseite zurückgehalten werden, und
- die Einrichtung (42, 44) zum Abtrennen schwerer Abfälle durch Schwerkraft unterhalb des in der Leitung gebildeten Luftstromes sowie unterhalb des Filters angeordnet ist.

2. Anlage nach Anspruch 1, dadurch gekennzeichnet, daß der Luftstrom, der in dem Transportvolumen gebildet ist, eine Geschwindigkeit in der Größenordnung von 2 bis 10 m/s besitzt.

3. Anlage nach einem der Ansprüche 1 und 2, dadurch gekennzeichnet, daß sie außerdem eine Druckluftquelle enthält.

4. Anlage nach Anspruch 3, dadurch gekennzeichnet, daß sie ferner wenigstens eine aufblasbare Trennwand enthält, die dazu bestimmt ist, im Innern des Fahrzeugs angeordnet zu werden, um den freien Querschnitt zu reduzieren, und mit Hilfe der Druckluftquelle aufgeblasen zu werden.

5. Anlage nach einem der vorhergehenden Ansprüche, die zum Reinigen von unterirdisch zirkulierenden Fahrzeugen bestimmt ist, dadurch gekennzeichnet, daß sie eine zweite Anpaßeinrichtung enthält, die am Auslaß der Leitung angeordnet und dazu bestimmt ist, einen Teil wenigstens einer zweiten Öffnung des Fahrzeugs zu umgeben, damit der durch die Anlage gebildete Luftstrom praktisch im geschlossenen Kreis zirkuliert.

6. Fahrzeug, das durch Verwendung der Anlage nach einem der vorhergehenden Ansprüche zu reinigen ist, dadurch gekennzeichnet, daß es in der Nähe seines Bodens Einrichtungen (80) zum vorzugsweise diskontinuierlichen Aussprühen von Druckluftstrahlen gegen diesen Boden enthält.

7. Fahrzeug nach Anspruch 6, dadurch gekennzeichnet, daß die Einrichtungen (80) zum Aussprühen der Strahlen in wenigstens zwei Gruppen verteilt sind, von denen jede Gruppe ein Magnetventil (78) enthält, das mit ihr verbunden ist.

8. Fahrzeug nach Anspruch 7, dadurch gekennzeichnet, daß jedes Magnetventil (78) unabhängig von anderen Magnetventilen gesteuert wird.

9. Fahrzeug nach Anspruch 8, dadurch gekennzeichnet, daß es eine zeitverzögerte Steuerung (86 bis 92) enthält, die mit jedem Magnetventil oder jeder Magnetventilgruppe verbunden ist.

**Claims**

1. Cleaning apparatus for a vehicle defining a closable transport volume having at least two openings, of the type which includes:

- a frame (30) defining conduit means having an inlet and an outlet,
- ventilating means (52) provided transversely to said conduit means for circulating an air flow from said inlet to said outlet,
- waste separating means (42, 44) provided transversely to said conduit means between said inlet of conduit means and said ventilating means, and including means for gravity separating heavy waste, and
- adapting means (24, 26) provided at said inlet for surrounding at least a portion of one of said at least two openings of said vehicle,
  characterized in that
- said conduit means includes a first substantially horizontal portion located between said inlet and said heavy waste separating means, and a second substantially vertical portion in which said flow is upwards,
- said waste separating means also includes a filter (50) for separating light waste,
- said filter (50) is located in said second substantially vertical portion of said conduit means so that air flows upwards through said filter, retained particles being kept at bottom face of said filter, and

- heavy waste gravity separating means (42, 44) is located below air flowing through said conduit means and below said filter.

2. Apparatus according to claim 1, characterized in that speed of air flowing through transport volume is between about 2 and about 10 m/s.

3. Apparatus according to one of claims 1 and 2, characterized in that it further includes a pressurized air source.

4. Apparatus according to claim 3, characterized in that it further includes an inflatable wall to be located in said vehicle for restricting flow area and for being inflated by said pressurized air source.

5. Apparatus according to anyone of preceeding claims, for cleaning underground vehicles, characterized in that it includes second adapting means mounted at said outlet for surrounding at least a portion of a second of said at least two openings of said vehicle so that air flow generated by said apparatus circulates around a closed circuit.

6. Vehicle to be cleaned by use of an apparatus according to anyone of preceeding claims, characterized in that it includes, near its floor, means (80) for projecting pressurized air jets, preferably discontinuous, towards said floor.

7. Vehicle according to claim 6, characterized in that said jet projecting means (80) are distributed into at least two groups each including an associated solenoid valve (78).

8. Vehicle according to claim 7, characterized in that each solenoid valve (78) is controlled independently from other solenoid valves.

9. Vehicle according to claim 8, characterized in that it includes time delay control means (86 - 92) connected to each solenoid valve or to each solenoid valve group.

FIG. 1

FIG. 4

FIG. 5

FIG. 6

FIG. 7

FIG. 2

FIG. 3